# EUROPEAN PATENT SPECIFICATION

(11) **EP 1 239 671 B1**
(45) Date of publication and mention of the grant of the patent: **25.07.2007**
(21) Application number: 02004502.7
(22) Date of filing: 27.02.2002
(51) Int. Cl.: H04N 5/445, G06F 13/28

(54) **Video apparatus, notably video decoder, and process for memory control such an apparatus**
Videogerät, insbesondere Videodekoder, und Speichersteuerungsverfahren in einem solchen Gerät
Appareil vidéo, en particulier décodeur vidéo, et procédé de contrôle de mémoire d'un tel appareil

(30) Priority: 09.03.2001 EP 01400628
(43) Date of publication of application: 11.09.2002
(73) Proprietor: Thomson Licensing, 92100 Boulogne-Billancourt (FR)
(72) Inventor: Faye, Daniel, 78250 Meulan (FR); Creusot, Daniel, 78960 Voisins le Bretonneux (FR); Ritz, Edouard,, 92310 Sèvres (FR)
(74) Representative: Berthier, Karine

(56) References cited:
- EP-A- 0 735 776
- EP-A- 0 840 512
- WO-A-99/66720
- ANDERSON R E ET AL: "INTEGRATING THE MPEG-2 SUBSYSTEM FOR DIGITAL TELEVISION" IBM JOURNAL OF RESEARCH AND DEVELOPMENT,IBM CORPORATION, ARMONK,US, vol. 42, no. 6, November 1998 (1998-11), pages 795-805, XP000952033 ISSN: 0018-8646
- PATENT ABSTRACTS OF JAPAN vol. 1999, no. 09, 30 July 1999 (1999-07-30) & JP 11 103429 A (SONY CORP), 13 April 1999 (1999-04-13)

## Description

The invention relates to a video apparatus, notably a video decoder, and to a process for controlling such an apparatus.
It is known to provide a video apparatus with a decoder circuit, for instance a MPEG decoder, in order to generate a video signal usable by a display, for instance as a CVBS signal or as a RGB signals, from a video digital stream. Such a decoder circuit uses a so-called Video RAM (random-access-memory) to retain data which are processed, for instance to decompress a MPEG stream.

Generally, a video apparatus also comprises an OSD circuit (OSD stands for On-Screen Display) to generate and send to the display images to be superimposed on the video sequence output by the decoder circuit ; these images are often menus with graphics.

The OSD circuit also needs RAM to generate and process the graphics, i.e. the OSD images.

Various implementations of memory management for OSD circuitry are known from JP-A-11 103 429, EP-A-0 735 776 and EP-A-0 840 512.

The invention seeks to provide a video apparatus with a decoder circuit and an OSD circuit with memory architecture with reduced memory size and thus also proposes a process to control this memory architecture according to the mode of operation of the video apparatus.

The invention proposes a video apparatus with a digital decoder and a related method in accordance with the attached claims.

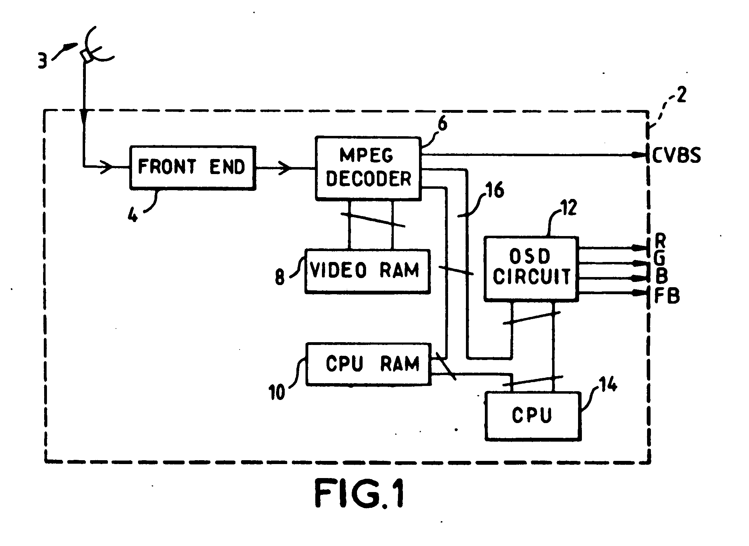

The invention will now be explained with reference to figure 1 representing a video apparatus according to the invention. The video apparatus of figure 1 is a satellite decoder 2. Only the parts which are necessary for understanding the invention have been represented.

An antenna 3 receives a signal representing at least one video sequence from a satellite. An input pin of the decoder 2 receives the signal transmitted by the antenna 3 to forward it to a digital front-end 4 comprising notably a tuner and a demodulator. From the antenna signal, the digital front-end generates a MPEG stream which is converted to a CVBS signal by a MPEG decoder 6. To decompress the MPEG stream, the MPEG decoder 6 is connected via a data bus to a video RAM 8.

On the other hand, the satellite decoder 2 also has an OSD circuit 12 for generating, upon instructions from a CPU 14, images (called graphics hereafter) to be superimposed on the CVBS signal. The graphics to be displayed are coded in RGB on a Scart connector with a fast blanking signal FB indicating when points of the graphics have to be displayed.

The CPU 14 and the OSD circuit 12 share a RAM, called CPU RAM 10, via a common data bus 16. The MPEG decoder 6 is also connected on this common bus 16.

The Video RAM 8 and the CPU RAM 10 can exchange data on the common bus 16 through the MPEG decoder 6 by DMA (DMA stands for Direct Memory Access). It should be noted however that the Video RAM 8 is not directly accessible from the CPU 14.

The system has to cope with three different memory sizes available for OSD depending on the configuration (mode of operation):
- Configuration 1 : Video displayed
   When moving pictures are displayed, the desirable RAM minimum size available for OSD should allow to store 262144 pixels in CLUT4 (Colour Lock-Up Table where 1 pixel = 4 bits) mode, which requires 131072 bytes memory space.
- Configuration 2 : Still pictures displayed
   When still pictures are displayed, the RAM size available for OSD can be extended to 996148 pixels in CLUT4 mode, which requires 448074 bytes memory space.
- Configuration 3 : no video nor still pictures
   When no moving pictures and still pictures are displayed, all video RAM should preferably become available for OSD, which represents 1.9 MB memory space approximately.

The CPU RAM 10 has a 2MB (Mega Bytes) capacity.

The Software occupies 1.25 MB in CPU RAM 10, until the scheduler has started. 750 KB are then left available for the system and the OSD buffer pools. A 150 KB system pool is sufficient to insure a robust and efficient functioning of the software. It then remains around 600 KB in CPU RAM 10 for the OSD pool.
When video is running (configuration 1), 112 KB of free memory space are available in Video RAM 8. Configuration 2 leaves 457 KB of available memory in Video RAM 8, whereas when no video and still pictures are running (configuration 3), almost the entire Video RAM 8 becomes available, which represents around 1.9 MB.
In configuration 1 and 2, the 600 KB available memory in CPU RAM 10 are sufficient to cover the preferable OSD sizes stated above.

Configuration 3 demands 1.9 MB of memory, which is more than the 600 KB available in RAM CPU 10. In configuration 3, RAM CPU 10 contains both the buffers displayed in the buffers currently used in RAM CPU, which represents 2*207360 = 414720 bytes (2 full screen buffers in CLUT4 mode, one displayed, one being used). The other buffers are stored in RAM Video 8. When a buffer is no more displayed or used, it is flushed to Video RAM 8 via a DMA transfer. When a buffer stored in Video RAM 8 has to be displayed or comes in use, it is loaded in the CPU RAM by a DMA transfer. With this mechanism, the Video RAM 8 plays the role of a cache memory for the CPU RAM 10.

4 different states have thus been defined depending on the OSD configuration :
- State 1 : Video (Video running)
- State 2 : Still (still picture running)
- State 3 : OSD RAM CPU (Only OSD running within the limits of 622080 bytes allocated)
- State 4 : OSD RAM Video (Only OSD running with more than 622080 bytes allocated)

States 1, 2, and 3 correspond to the normal memory mapping, where all the OSD buffers are located in CPU RAM. State 4 correspond to the memory mapping where all the Video RAM is available for OSD buffers.

States 1, 2 and 3 are managed the same way by the driver of the OSD circuit 12, since all OSD buffers allocated will be placed in RAM CPU 10. Direct transitions between state 1, 2 and state 4 can't happen, because in state 4, the Video RAM is used for the OSD and isn't available for still pictures or video. A transition to state 3 is compulsory before going to state 4. Therefore, the only time the OSD driver has to deal with Video RAM 8 concerns the transitions between state 3 and state 4.

Transition from state 3 to state 4 happens when the application asks the driver to create a new display by calling an OSD_credisplay function and when the total size allocated in CPU RAM 10 for the OSD displays (after the OSD_credisplay call) overflows the 622080 bytes available in CPU RAM 10. In this case, Video RAM 8 shall be activated. A pool of 1.9 MB shall then be created in Video RAM, all the OSD buffers stored in CPU RAM shall be transferred in RAM Video, the display descriptors updated accordingly, and the buffers displayed and the working buffer shall stay in CPU RAM.

Transition to state 4 to state 3 happens when the application asks the driver to free a display by calling a OSD_free_display function and when the total size allocated for the OSD displays (after the OSD_free_display call) becomes inferior to 498074 bytes (corresponding to the size needed in still picture mode). In this case, Video RAM 8 shall be deactivated and shall not be used anymore by the OSD driver. All the OSD buffers in Video RAM 8 shall then be transferred in CPU RAM 10, the display descriptor updated accordingly, and the pool in Video RAM 8 shall be deleted.

When in state 4, the Video RAM 8 is used as a cache for the OSD. The management of OSD regions and buffers use the same structures as the one already in use. The only difference is that the buffer address stored in the OSD buffer control blocks in CPU RAM 10 correspond to Video Ram 8 address in state 4, whereas the correspond to CPU RAM address in state 1, 2 and 3. To help management of the Video RAM 8 as cache, an internal array of structure is used, which contains the buffer ID, the address in CPU RAM 10, the address in Video RAM 8, the size and a pointer to the buffer descriptor, for each of the 16 display buffers and the buffers currently drawn.

Before drawing or displaying an OSD buffer placed in Video RAM 8, the driver will first have to transfer it from Video RAM 8 to CPU RAM 10. When a displayed buffer or the currently drawn buffer isn't used anymore and is replaced by another one, the driver as to flush it in Video RAM (i.e. transfer it from CPU RAM 10 to Video RAM 8). In both cases, the array structure will be updated correspondingly.

## Claims

1. Video apparatus with a digital decoder (6) comprising:
- a first memory (8) for storing video;
- a second memory (10) for storing on-screen display data;
- an on-screen display circuit (12) for generating on-screen display graphics signal from the on-screen display data in the second memory (10); **characterized in that** the first memory (8) is adapted to receive on-screen display data which is not displayed any more from the second memory (10) and to transfer said on-screen display data back to the second memory in response to a request for display of data stored in the first memory.

2. Video apparatus according to claim 1, further comprising a processing unit (14), the first memory (8) not being directly accessible by the processing unit (14).

3. Video apparatus according to any of claim 1 or 2, wherein the first memory (8) is a random access memory used for video decompression.

4. Video apparatus according to any of claims 1 to 3, wherein the digital decoder (6) is connected to a digital front-end (4).

5. Video apparatus according to any of the claims 1 to 4, wherein transfer between the first and second memories (8, 10) is made using a direct memory access.

6. Video apparatus according to claim 3, wherein the first memory is made available for storing on-screen display data in a state where the first memory is not used for holding video data.

7. Method for controlling a video apparatus comprising a digital decoder, (6), a second memory (10), an on-screen display circuit (12) for generating an on-screen display signal based on data stored in the second memory, said method comprising the step of:
- writing on-screen display data to the second memory (10) for access by the on-screen display circuit;
**characterized in that**, the video apparatus comprising a first memory (8) used for video decompression, it further comprises the steps of:
- transferring on-screen display data which is not to be displayed any more to the first memory (8);
- upon request, transferring back on-screen display data from the first memory (8) to the second memory (10).

8. Method according to claim 7, further comprising the steps of:
- issuing a request for the circuit (12) to use more than a given size in the second memory (10),
- realising a direct memory transfer of on-screen display data from the second memory (10) to the first memory (8).

9. Method according to claim 8, further comprising the steps of:
- issuing a request for the circuit (12) to use on-screen display data in the first memory (8),
- transferring said on-screen display data to be used from the first memory (8) to the second memory (10).

10. Method according to one of the claims 7 to 9, wherein the transfer of on-screen display data to the first memory is allowed when the first memory is unavailable for video decompression.

## Patentansprüche

1. Videogerät mit einem digitalen Decoder (6) umfassend:
- einen ersten Speicher (8) zum Speichern von Video;
- einen zweiten Speicher (10) zum Speichern von Bildschirmanzeigedaten;
- eine Bildschirmanzeigeschaltung (12) zum Erzeugen eines Grafiksignals einer Bildschirmanzeige aus den Bildschirmanzeigedaten in dem zweiten Speicher (10), **dadurch gekennzeichnet, dass** der erste Speicher (8) eingerichtet ist, um Bildschirmanzeigedaten, welche nicht mehr angezeigt werden, von dem zweiten Speicher (10) zu empfangen und die Bildschirmanzeigedaten als Reaktion auf eine Anforderung zum Anzeigen von Daten, die in dem ersten Speicher gespeichert sind, zu dem zweiten Speicher zurück zu übertragen.

2. Videogerät nach Anspruch 1, ferner eine Verarbeitungseinheit (14) umfassend, wobei die Verarbeitungseinheit (14) nicht direkt auf den ersten Speicher (8) zugreifen kann.

3. Videogerät nach irgendeinem der Ansprüche 1 oder 2, wobei der erste Speicher (8) aus einem Arbeitsspeicher besteht, der für Videodekompression verwendet wird.

4. Videogerät nach irgendeinem der Ansprüche 1 bis 3, wobei der digitale Decoder (6) mit einer digitalen Vorstufe (4) verbunden ist.

5. Videogerät nach irgendeinem der Ansprüche 1 bis 4, wobei das Übertragen zwischen dem ersten und zweiten Speicher (8, 10) unter Verwendung eines direkten Speicherzugriffs erfolgt.

6. Videogerät nach Anspruch 3, wobei der erste Speicher zum Speichern von Bildschirmanzeigedaten in einem Zustand verfügbar gemacht wird, in dem der erste Speicher nicht zum Halten von Videodaten verwendet wird.

7. Verfahren zum Steuern eines Videogeräts, das einen digitalen Decoder (6), einen zweiten Speicher (10), eine Bildschirmanzeigeschaltung (12) zum Erzeugen eines Bildschirmanzeigesignals auf der Grundlage von Daten umfasst, die in dem zweiten Speicher gespeichert sind, wobei das Verfahren den folgenden Schritt umfasst:
- Schreiben von Bildschirmanzeigedaten für den Zugriff durch die Bildschirmanzeigeschaltung in den zweiten Speicher (10);
**dadurch gekennzeichnet, dass** das Videogerät einen ersten Speicher (8) umfasst, der für Videodekompression verwendet wird, und es ferner die folgenden Schritte umfasst:
- Übertragen von Bildschirmanzeigedaten, welche nicht mehr angezeigt werden, in den ersten Speicher (8);
- nach Anforderung, Zurückübertragen von Bildschirmanzeigedaten von dem ersten Speicher (8) zu dem zweiten Speicher (10).

8. Verfahren nach Anspruch 7, ferner die folgenden Schritte umfassend:
- Ausgeben einer Anforderung an die Schaltung (12), mehr als eine vorgegebene Größe in dem zweiten Speicher (10) zu verwenden,
- Durchführen einer direkten Speicherübertragung von Bildschirmanzeigedaten von dem zweiten Speicher (10) zu dem ersten Speicher (8).

9. Verfahren nach Anspruch 8, ferner die folgenden Schritte umfassend:
- Ausgeben einer Anforderung an die Schaltung (12), Bildschirmanzeigedaten in dem ersten Speicher (8) zu verwenden,
- Übertragen der Bildschirmanzeigedaten, die verwendet werden sollen, von dem ersten Speicher (8) zu dem zweiten Speicher (10).

10. Verfahren nach einem der Ansprüche 7 bis 9, wobei die Übertragung von Bildschirmanzeigedaten zu dem ersten Speicher ermöglicht wird, wenn der erste Speicher für Videodekompression nicht verfügbar ist.

## Revendications

1. Appareil vidéo doté d'un décodeur numérique (6) comprenant :
- une première mémoire (8) pour stocker une vidéo ;
- une deuxième mémoire (10) pour stocker des données d'affichage à l'écran ;
- un circuit d'affichage à l'écran (12) pour générer un signal de graphiques d'affichage à l'écran provenant des données d'affichage à l'écran de la deuxième mémoire (10) ; **caractérisé en ce que** la première mémoire (8) est adaptée pour recevoir des données d'affichage à l'écran qui ne sont plus affichées à partir de la deuxième mémoire (10) et pour retransférer lesdites données d'affichage à l'écran à la deuxième mémoire en réponse à une demande d'affichage de données stockées dans la première mémoire.

2. Appareil vidéo selon la revendication 1, comprenant en outre une unité de traitement (14), la première mémoire (8) n'étant pas directement accessible par l'unité de traitement (14).

3. Appareil vidéo selon l'une quelconque des revendications 1 ou 2, où la première mémoire (8) constitue une mémoire vive utilisée pour une décompression vidéo.

4. Appareil vidéo selon l'une quelconque des revendications 1 à 3, où le décodeur numérique (6) est connecté à un ordinateur frontal numérique (4).

5. Appareil vidéo selon l'une quelconque des revendications 1 à 4, où un transfert entre les première et deuxième mémoires (8, 10) est effectué à l'aide d'un accès direct à la mémoire.

6. Appareil vidéo selon la revendication 3, où la première mémoire est rendue disponible pour stocker des données d'affichage à l'écran dans un état où la première mémoire n'est pas utilisée pour contenir des données vidéo.

7. Procédé de contrôle d'un appareil vidéo comprenant un décodeur numérique (6), une deuxième mémoire (10), un circuit d'affichage à l'écran (12) pour générer un signal d'affichage à l'écran en fonction de données stockées dans la deuxième mémoire, ledit procédé comprenant l'étape suivante :
- écrire des données d'affichage à l'écran sur la deuxième mémoire (10) pour un accès par le circuit d'affichage à l'écran ;
**caractérisé en ce que**, l'appareil vidéo comprenant une première mémoire (8) utilisée pour une décompression vidéo, il comprend en outre les étapes suivantes :
- transférer des données d'affichage à l'écran ne devant plus être affichées vers la première mémoire (8) ;
- sur demande, retransférer des données d'affichage à l'écran à partir de la première mémoire (8) vers la deuxième mémoire (10).

8. Procédé selon la revendication 7, comprenant en outre les étapes suivantes :
- émettre une demande pour le circuit (12) pour utiliser davantage qu'une taille donnée dans la deuxième mémoire (10),
- réaliser un transfert de mémoire directe de données d'affichage à l'écran à partir de la deuxième mémoire (10) vers la première mémoire (8).

9. Procédé selon la revendication 8, comprenant en outres les étapes suivantes :
- émettre une demande pour le circuit (12) pour utiliser des données d'affichage à l'écran dans la première mémoire (8),
- transférer lesdites données d'affichage à l'écran à utiliser à partir de la première mémoire (8) vers la deuxième mémoire (10).

10. Procédé selon l'une des revendications 7 à 9, où le transfert de données d'affichage à l'écran vers la première mémoire est autorisé lorsque la première mémoire est indisponible pour une décompression vidéo.
